# EUROPEAN PATENT APPLICATION

(11) **EP 2 687 489 A1**
(43) Date of publication of application: **22.01.2014**
(21) Application number: 12176719.8
(22) Date of filing: 17.07.2012
(51) Int. Cl.: C02F 1/70, C02F 1/72

(54) **A process for removal of hydrogen peroxide from an aqueous solution**

(71) Applicant: SOLVAY SA, 1120 Bruxelles (BE)
(72) Inventor: Dournel Pierre, B-1030 Brussels (BE)
(74) Representative: Vande Gucht, Anne

(57) **Abstract**

The present invention relates to a process for removal of hydrogen peroxide from an aqueous solution. The process of the present invention can be employed for the treatment of aqueous solutions such as industrial waste-water streams from hydrogen production plants, paper bleaching factories and semi-conductor manufacturing plants.

## Description

The present invention relates to a process for removal of hydrogen peroxide from an aqueous solution. The process of the present invention can be employed for the treatment of aqueous solutions such as industrial waste-water from hydrogen peroxide production plants, paper bleaching factories and semiconductor industry.

Hydrogen peroxide is conventionally produced on a large-scale and used for a broad range of industrial applications. For instance, hydrogen peroxide is commonly employed as a bleaching agent for paper production, as an oxidizing agent in the chemical industry, for sterilization of food-stuff packaging materials as well as an agent for metal surface treatments and as cleaning agent in the semiconductor industry.

As a consequence, waste-water streams resulting from these industrial applications contain a considerable amount of hydrogen peroxide. Because of its antiseptic properties, hydrogen peroxide is detrimental for microorganisms in biological waste-water treatment plants and therefore needs to be removed from the waste-water stream before a biological waste-water treatment can take place. Furthermore, if a waste-water stream containing hydrogen peroxide enters a biological waste-water treatment plant, formation of gaseous oxygen may take place. This causes a floating of suspensions in the segmentation tank so that they may be an undesired lowering of quality of purified water obtained by the biological water treatment.

In addition, because hydrogen peroxide is a strong oxidant, it may react with other impurities present in the waste-water stream, whereby some toxic compounds may be formed. Moreover, because such reactions are usually highly exothermic and often accompanied by evolution of gaseous products, they pose a potential safety risk during plant operation.

There are several known methods for removal of hydrogen peroxide from an aqueous solution. For instance, water-soluble iron or manganese salts may be added to waste stream under acidic conditions, whereby decomposition of hydrogen peroxide takes place. However, these added iron or manganese salts need to be subsequently removed from the waste-water stream, which leads to additional operational costs.

Another known method for removal of hydrogen peroxide from a waste-water stream employs addition of reducing agents such as sodium bisulfite. As a consequence, a considerable amount of gaseous sulfur dioxide is released, which itself causes an environmental pollution. Moreover, this method requires that a significant amount of reducing agents such as sodium bisulfite is used, what also leads to increased operational costs.

A further method for removal of hydrogen peroxide from an aqueous waste-water stream employs manganese dioxide as a catalyst. The drawback of this method arises from a substantial leaching of manganese compounds into the water stream, in particular, under acidic conditions. Furthermore, evolution of molecular oxygen during the decomposition of hydrogen peroxide on the surface of the catalyst leads to a significant mechanical erosion of the catalyst, so that small catalyst particles enter the waste-water stream and need to be removed in a separate process step.

A further method for removal of hydrogen peroxide from aqueous solutions is based on use of active carbon. However, if active carbon alone is used for decomposition of hydrogen peroxide in aqueous solutions, it usually shows only a moderate catalytic activity. Because a number of various impurities are commonly present in the aqueous waste stream, depending on its origin, active carbon becomes poisoned by these impurities, and its catalytic activity further decreases. Furthermore, active carbon itself can be oxidized by hydrogen peroxide to carbon dioxide, which additionally reduces the life-time of such catalyst.

US 5,338,462 suggests to overcome these drawbacks of active carbon catalysts by adjusting the pH value of the waste-water stream and adding water-soluble iron salts such as sulfates, chlorides or nitrates. However, addition of water-soluble iron salts leads to pollution of the waste-water stream and causes additional operating costs resulting from the adjustment of the pH. Furthermore, industrial waste-water streams commonly contain hydrogen peroxide stabilizers, which reduce catalytic activity of the water-soluble iron salts.

S.-S. Lin and M. D. Gurol (Environm. Sci. Technol., 1998, 32, pp. 1417-1423) reported that goethite (α-FeOOH) particles can be employed for catalytic decomposition of aqueous hydrogen peroxide in the range of 1 to 10 mM. However, this study did not investigate decomposition of more concentrated aqueous hydrogen peroxide solutions and did not address the issue of mechanical erosion of the catalyst due to the evolution of molecular oxygen.

Thus, there is still a need for an efficient process for removal of hydrogen peroxide from an aqueous solution. Such process should be applicable for the treatment of a broad range of industrial wastewater streams containing diverse organic and inorganic impurities. The catalyst needs to retain its activity in the presence of these impurities over a long period of time. Furthermore, it is important that the catalyst employed in such a process is stable within a sufficiently broad range of pH and mechanically withstands the pressure arising from the oxygen gas evolution. Finally, such process needs to be cost-efficient.

The above technical problem has been solved by the subject matter of the present invention. The authors of the present invention surprisingly found that hydrogen peroxide can be efficiently removed from an aqueous solution by contacting said aqueous solution with an iron oxide. This process can be carried out at a broad range of hydrogen peroxide concentrations in the aqueous solution, in the presence of organic and inorganic impurities and without any noticeable decrease of the catalytic activity of iron oxide. Finally, the mechanical erosion of the iron oxide is low and no significant leaching of iron into the aqueous solution takes place. Thus, the aqueous solution after the treatment usually contains less than 1000 mg/l iron, preferably less than 100 mg/l, more preferred less than 50 mg/l, yet more preferred less than 10 mg/l and particularly preferred less than 5 mg/l iron. The iron content is expressed in mg of iron per 1 l of the aqueous solution after treatment, measured at 25°C. The iron content may be determined by ASTM D1068-10.

Accordingly, the present invention relates to a process for catalytic decomposition of hydrogen peroxide in an aqueous solution, wherein the process comprises contacting the aqueous solution with an iron oxide. The term "aqueous solution" as used herein relates to liquid homogeneous and heterogeneous mixtures comprising water and hydrogen peroxide. Thus, the term "aqueous solution" relates *inter alia* to suspensions, emulsions and foams.

The iron oxide used in the process of the present invention has a sufficiently large specific surface area and a sufficiently high porosity, so that the catalytic decomposition of hydrogen peroxide is fast and efficient. Preferably, the specific surface area of the iron oxide is higher than 100 m²/g, preferably higher than 150 m²/g, even more preferred higher than 200 m²/g and particularly preferred higher than 250 m²/g. The specific surface area of the iron oxide may be measured by a N₂ gas BET surface area analyzer using the test method ASTM D3663 - 03 (2008).

The particle size of the iron oxide particles employed typically ranges between 0.02 mm and 10 mm, more preferred between 0.05 mm and 5.0 mm, particularly preferred between 0.1 mm and 2.0 mm. Thus, about 90% of iron oxide particles have a size within said range. The particle size of the iron oxide particles may be determined by standard test methods for particle-size distribution using sieve analysis, for instance by ASTM D6913 - 04 (2009).

The iron oxide for use in the process of the present invention is preferably selected from one of the following: granular ferrihydrite (Fe₅HO₈ · 4 H₂O) goethite (α-FeOOH), haematite (α-Fe₂O₃) or synthetic granular ferric hydroxide (GFH), GFH being particularly preferred. GFH mainly consists of β-FeOOH and Fe(OH)₃. GFH is commonly used for absorption of toxic impurities such as arsenic, copper and zinc from drinking water but has never been used for removal of hydrogen peroxide from aqueous waste streams.

Granular ferric hydroxide for use in the present invention preferably has
■ a specific surface area of not less than 250 m²/g;
■ iron content of between 51 wt.-% and 71 wt.-% based on the dry weight of the iron oxide; and
■ particle size between 0.1 mm and 2.0 mm.

The corresponding materials are commercially available, for instance from GEH Wasserchemie GmbH & Co. KG (Osnabruck, Germany) under the trademarks GEH 101®, GEH 102®, and GEH 104® or from LANXESS AG (Leverkusen, Germany) under the trade name BAYOXIDE® E33.

The process of the present invention may be carried out at broad range of hydrogen peroxide concentrations. However, its use is particularly advantageous when the content of hydrogen peroxide in the aqueous solution ranges between 0.1 g/l and 200 g/l, more preferred between 1 g/l and 100 g/l, particularly preferred between 5 g/l and 50 g/l. In the present application, the content of hydrogen peroxide in the aqueous solution is expressed in g of hydrogen peroxide per 1 l of the aqueous solution, measured at 25°C. The content of hydrogen peroxide in the aqueous solution may be determined by a ceric sulfate titration or by potassium permanganate titration (CEFIC peroxygens H₂O₂ AM-7157, March 2003).

The process for removal of hydrogen peroxide may be carried out in a broad range of pH values. It is, however, preferred, that the aqueous solution employed in the process of the present invention has a pH value above 3.0, preferably above 4.0, particularly preferred above 5.0. Preferably, pH value of the aqueous solution is below 12.0, even more preferred below 10.0, yet even more preferred below 8.0. Accordingly, pH value of the aqueous solution may be between 3.0 and 12.0, preferably between 10.0 and 6.0 and particularly preferred between 5.0 and 8.0. Under these conditions, the process for removal of hydrogen peroxide is particularly efficient and the iron oxide shows a particularly high catalytic activity as well as chemical and mechanical stability.

The process of the present invention is typically carried out at a temperature between 0°C and 70°C, preferably between 10°C and 60°C, particularly preferred between 30°C and 50°C.

The pressure, at which the process for removal of hydrogen peroxide is carried out, is not particularly limited, as long as molecular oxygen produced during the process can be released. The process for removal of hydrogen peroxide is preferably carried out at atmospheric pressure. However, it is possible to carry out the process for removal of hydrogen peroxide at a pressure between 10.0 kPa and 101.3 kPa or at a pressure which is higher than 101.3 kPa. Hereinafter the term "atmospheric pressure" refers to a pressure of 101.3 kPa.

In the process of the present invention, the aqueous solution containing the hydrogen peroxide is brought into contact with iron oxide. For this purpose, the aqueous solution may be mixed with the iron oxide in a bed process, or preferably put through a column filled with the iron oxide. The flow rate of the aqueous solution through the iron oxide-filled column is adjusted depending on factors, such as, for instance, concentration of the hydrogen peroxide in the aqueous solution or desired residual content of hydrogen peroxide in the effluent leaving the column. Preferably, the residence time of the aqueous solution in the column is between 2 and 60 minutes, more preferably between 5 and 30 minutes and particularly preferred between 10 and 20 minutes. Thus, the aqueous solution is in contact with the iron oxide for preferably more than 2 minutes, more preferred for more than 5 minutes and particularly preferred for more than 10 minutes.

The process for removal hydrogen peroxide can be carried out in the presence of water-soluble organic compounds such as alcohols, ketones, phenols, aliphatic and aromatic carboxylic acids and salts of aliphatic and aromatic amines as well as in the presence of chelating agents. In particular, the process can be used for the treatment of aqueous waste stream from a hydrogen peroxide to propylene oxide (HPPO) production unit.

The aqueous solution may have a total organic carbon (TOC) content of more than 10 mg/l, preferably more than 100 mg/l, more preferred more than 1000 mg/l, the TOC content being expressed in mg per 11 of the aqueous solution after the treatment. The process of the present invention may also be used for the aqueous solution having a TOC content below 10 mg/l. The TOC content may be determined by the method ISO 8245:2000.

The process for removal of hydrogen peroxide can be performed in the presence of inorganic cations such as sodium, potassium, magnesium and calcium and/or inorganic anions such as sulfate, nitrate and phosphate.

The effluent after the treatment with iron oxide can be subsequently subjected to a biological waste-water treatment, to a solid-phase process for extraction, to any other extraction process or to any other suitable purification process known in the prior art.

Another aspect of the present invention relates to a process for removal of hydrogen peroxide from an aqueous solution, wherein the process comprises the following steps:
a) adjusting the pH value of the aqueous solution;
b) optionally, removing insoluble materials from the aqueous solution obtained in step a);
c) catalytically decomposing the hydrogen peroxide from the aqueous solution obtained in steps a) or b).

The pH value of the aqueous solution in step a) may be adjusted by addition of an acid, which can be optionally diluted with water. The choice of the acid which can be used for this purpose is not particularly limited as long as the acid has a sufficient strength for achieving the desired pH value, does not interfere with the process for removal of hydrogen peroxide from the aqueous solution and does not affect the catalytic activity of the iron oxide. For example, Bronsted acids such as sulfuric acid, hydrochloric acid, phosphoric acid, or nitric acid can be employed for this purpose. Alternatively, the pH value of the aqueous solution can be adjusted upon addition of a salt such as sodium hydrogen sulfate or of an aqueous solution of this salt.

If desired, the pH value of the aqueous solution in step a) may be adjusted by addition of an inorganic base, which is optionally dissolved in water. The choice of the base which can be used for the adjustment of the pH value of the aqueous solution in step a) is not particularly limited as long as the base has a sufficient strength for achieving the desired pH value, does not interfere with the process for removal of hydrogen peroxide from the aqueous solution and does not affect the catalytic activity of the iron oxide. For example, alkaline metal hydroxides such as sodium hydroxide or potassium hydroxide may be used.

The pH value of the aqueous solution can be determined by any appropriate test method known in the prior art. The measurement is preferably carried out using a glass electrode as a sensor at a temperature of 25±0. °C. For pH values ranging from 0.5 to 14 the standard test method ASTM D 1293-99 (reapproved 2005), test method B can be employed. pH meters and glass electrodes suitable for this purpose are known in the prior art and are obtainable e.g. from Metrohm AG (Herisau, Switzerland). An example of a suitable pH meter is Metrohm 827 pH Lab, equipped with a combined pH glass electrode, filled with 3 mol/l KCl solution such as, for instance, Unitrode.

The adjustment of the pH value in step a) can be accompanied by a precipitation of crystalline or amorphous compounds. Therefore, the composition obtained in step a) may be consequently extracted with a water non-miscible solvent whereby the precipitated compounds are at least partially dissolved. Preferably, the water non-miscible solvent employed in step b) is a low polarity organic solvent having a boiling point/distillation range between 50°C and 250°C at atmospheric pressure. Boiling points and distillation ranges of organic solvents can be determined by the test method ASTM D 1078-05. Distillation ranges of petroleum products can be further determined by the test method ASTM D 86-11a. Alternatively, the precipitated compounds may be separated by filtration.

The choice of the water non-miscible solvent is not particularly limited as long as it is suitable for the liquid-liquid extraction of the composition obtained in step a). For instance, solvents such as toluene, xylene, n-heptane, diisobutylcarbinol (DBC) or a mixture of aromatic hydrocarbons or light petroleum can be used for this purpose. The particularly preferred water non-miscible solvent employed in step b) is a mixture of aromatic hydrocarbons having a distillation range of about 181°C to about 208°C at atmospheric pressure and an aromatic content of more than 98 wt.-%, preferably more than 99 wt.-%. This mixture is commercially available from ExxonMobil Chemical under the trade name Solvesso™ 150. In an alternative embodiment of the present invention, a mixture of Solvesso™ 150 and DBC can be used in step b).

Step c) of the process for removal of hydrogen peroxide from an aqueous solution is the process for catalytic decomposition of hydrogen peroxide according to the present invention.

The process of the present invention typically allows removal of at least 90 wt.-%, preferably at least 95 wt.-%, even more preferred at least 98 wt.-% and particularly preferred at least 99.5 wt.-% of the hydrogen peroxide from the aqueous solution. Accordingly, the effluent after the treatment with iron oxide typically contains not more than 50 mg/l, preferably not more than 20 mg/l, for instance not more than 10 mg/l of hydrogen peroxide. Therefore, the effluent after the treatment with iron oxide can be directly subjected to biological treatment. Moreover, since the process of the present invention does not introduce any substantial amounts of iron into the aqueous solution, the effluent after the treatment with iron oxide can also be re-used for technical purposes, for instance as cooling water. Such re-use of the effluent is particularly advantageous in areas where water is a scarce resource.

In the process of the present invention, the iron oxide retains more than 90% of its catalytic activity after not less than 10 hours, preferably after not less than 20 hours, particularly preferred after not less than 40 hours. Moreover, preferably no noticeable mechanical erosion of the catalyst takes place.

The aqueous solution treated by the processes of the present invention is usually industrial waste-water.

### Description of the drawings

Figures 1a and 1b show decomposition of hydrogen peroxide in the aqueous solution having a pH of 5.0 at residence time of 30 min.
Figure 2a and 2b show decomposition of hydrogen peroxide in the aqueous solution having a pH of 5.0 at residence time of 15 min.
Figure 3 illustrates decomposition of hydrogen peroxide in the aqueous solution having a pH of 5.0 during a long term run at various residence times.

### Examples

The following non-limiting examples will illustrate representative embodiments of the invention in detail.

In the following examples, GFH 101® purchased from GEH Wasserchemie GmbH & Co KG was used. 50 ml of GFH 101® were used to fill a column. The aqueous solution containing hydrogen peroxide was passed through the column at different flow rates corresponding to the desired residence times. All experiments were carried out at a temperature of 40°C and at atmospheric pressure.

The hydrogen peroxide contents in the aqueous solutions on the column inlet and column outlet were monitored by automatic titration with cerium sulfate.

### Example 1 - Tests performed at residence time of 30 min

### Test conditions

| | |
|---|---|
| pH | 5.00 |
| temperature | 40°C |
| GFH Volume | 50 ml |
| residence time | 30 min |

The aqueous solution on the column inlet contained about 5 g/l hydrogen peroxide within the first 24 hours (Table 1) and about 40 g/l hydrogen peroxide within the second 24 hours (Table 2). No hydrogen peroxide could be detected at the outlet of the column at any time.

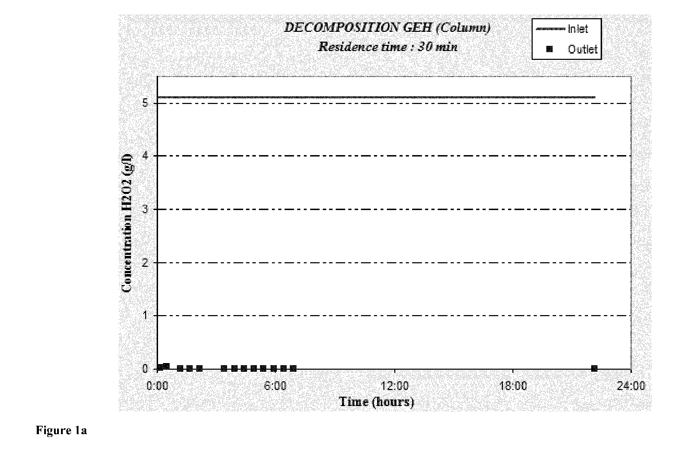

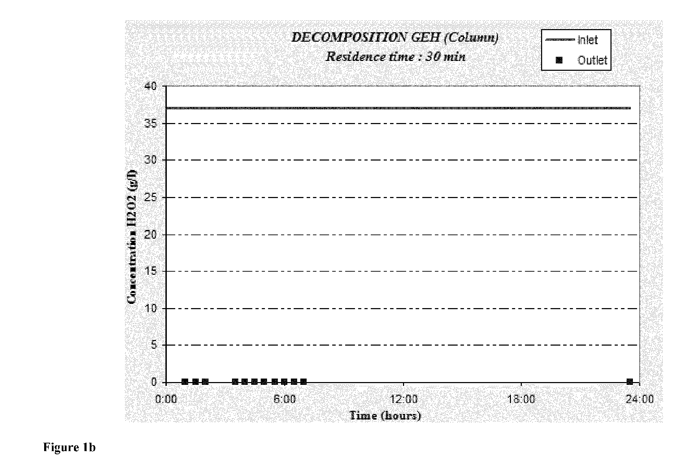

The same catalyst was used for the aqueous solution containing 5 g/l and for the aqueous solution containing 40 g/l hydrogen peroxide. The test results are summarized in Table 1 and Table 2 below and are illustrated by Figures 1a and 1b.

**Table 1**

| Time | Hydrogen peroxide content (g/l) | |
|---|---|---|
| (h:min) | Inlet | Outlet |
| 0:00 | 5.1 | - |
| 0:10 | 5.1 | 0.0 |
| 0:30 | 5.1 | 0.0 |
| 1:10 | 5.1 | 0.0 |
| 1:40 | 5.1 | 0.0 |
| 2:10 | 5.1 | 0.0 |
| 3:25 | 5.1 | 0.0 |
| 4:25 | 5.1 | 0.0 |
| 4:55 | 5.1 | 0.0 |
| 5:25 | 5.1 | 0.0 |
| 5:55 | 5.1 | 0.0 |
| 6:25 | 5.1 | 0.0 |
| 6:55 | 5.1 | 0.0 |
| 22:10 | 5.1 | 0.0 |

**Table 2**

| Time | Hydrogen peroxide content (g/l) | |
|---|---|---|
| (h:min) | Inlet | Outlet |
| 0:00 | 37.0 | - |
| 1:00 | 37.0 | 0.0 |
| 1:30 | 37.0 | 0.0 |
| 2:00 | 37.0 | 0.0 |
| 3:30 | 37.0 | 0.0 |
| 4:00 | 37.0 | 0.0 |
| 4:30 | 37.0 | 0.0 |
| 5:00 | 37.0 | 0.0 |
| 5:30 | 37.0 | 0.0 |
| 6:00 | 37.0 | 0.0 |
| 6:30 | 37.0 | 0.0 |
| 7:00 | 37.0 | 0.0 |
| 23:30 | 37.0 | 0.0 |

No particles originating from the catalyst were observed in the outlet. Thus, the catalyst retained its catalytic activity and mechanical structure during both experiments.

### Example 2 - Tests performed at residence time of 15 min

### Test conditions

| | |
|---|---|
| pH | 5.00 |
| temperature | 40°C |
| GFH Volume | 50 ml |
| residence time | 15 min |

The aqueous solution on the column inlet contained about 5 g/l hydrogen peroxide within the first 24 hours (Table 3) and about 40 g/l hydrogen peroxide within the second 24 hours (Table 4). No hydrogen peroxide could be detected at the outlet of the column at any time.

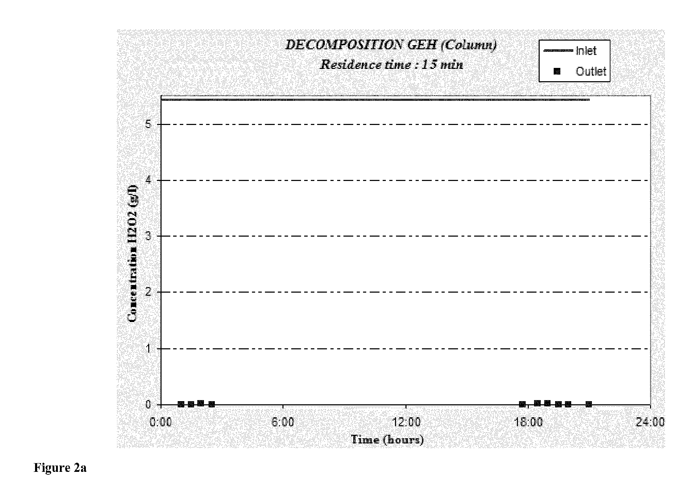

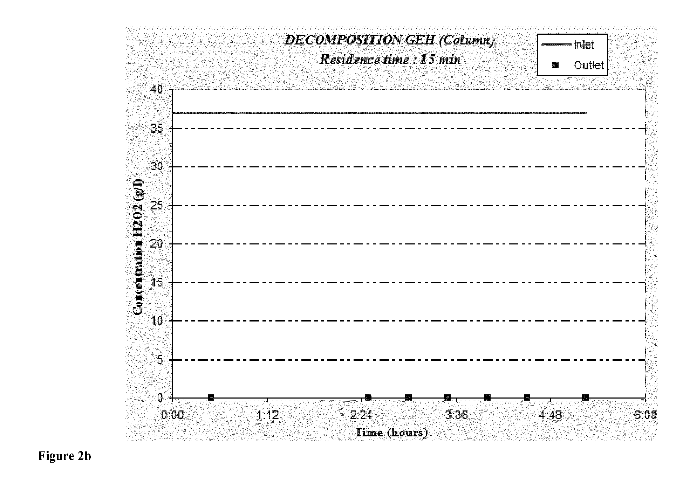

The same catalyst was used for the aqueous solution containing 5 g/l hydrogen peroxide and for the aqueous solution containing 40 g/l hydrogen peroxide. The test results are summarized in Table 3 and Table 4 below and are illustrated by Figures 2a and 2b:

**Table 3**

| Time | Hydrogen peroxide content (g/l) | |
|---|---|---|
| (h:min) | Inlet | Outlet |
| 0:00 | 5.4 | - |
| 1:00 | 5.4 | 0.0 |
| 1:30 | 5.4 | 0.0 |
| 2:00 | 5.4 | 0.0 |
| 2:30 | 5.4 | 0.0 |
| 17:45 | 5.4 | 0.0 |
| 18:30 | 5.4 | 0.0 |
| 19:00 | 5.4 | 0.0 |
| 19:30 | 5.4 | 0.0 |
| 20:00 | 5.4 | 0.0 |
| 21:00 | 5.4 | 0.0 |

**Table 4**

| Time | Hydrogen peroxide content (g/l) | |
|---|---|---|
| (h:min) | Inlet | Outlet |
| 0:00 | 36.9 | - |
| 0:30 | 36.9 | 0.0 |
| 2:30 | 36.9 | 0.0 |
| 3:00 | 36.9 | 0.0 |
| 3:30 | 36.9 | 0.0 |
| 4:00 | 36.9 | 0.0 |
| 4:30 | 36.9 | 0.0 |
| 5:15 | 36.9 | 0.0 |

No particles resulting from the catalyst were observed in the outlet. Thus, the catalyst retained its catalytic activity and mechanical structure during both experiments.

### Example 3 - long time run

### Test conditions

| | |
|---|---|
| pH | 5.00 |
| temperature | 40°C |
| | GFH Volume 15 ml. The amount of the catalyst was reduced in order to enable an easier detection of the decrease of catalytic activity, if it takes place. residence time 10 min |

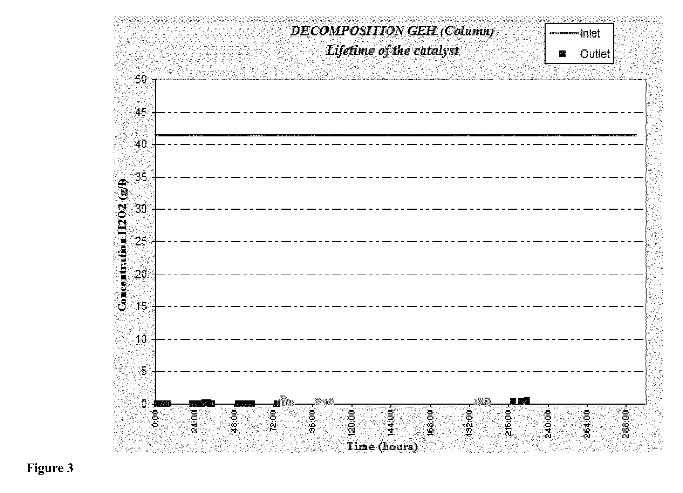

The results of the long time run experiment are summarized in Table 5 and illustrated by Figure 3.

**Table 5**

| Time (h.mm) | Hydrogen peroxide content (g/l) | | Residence time (min) |
|---|---|---|---|
| | Inlet | Outlet | |
| 0:00 | 41.3 | | 10 |
| 1:00 | 41.3 | 0.05 | 10 |
| 1:40 | 41.3 | 0.01 | 10 |
| 2:20 | 41.3 | 0.00 | 10 |
| 2:55 | 41.3 | 0.01 | 10 |
| 4:30 | 41.3 | 0.00 | 10 |
| 5:10 | 41.3 | 0.01 | 10 |
| 5:55 | 41.3 | 0.01 | 10 |
| 6:40 | 41.3 | 0.00 | 10 |
| 7:35 | 41.3 | 0.01 | 10 |
| 22:40 | 41.3 | 0.01 | 10 |
| 24:40 | 41.3 | 0.01 | 10 |
| 26:10 | 41.3 | 0.06 | 10 |
| 27:25 | 41.3 | 0.03 | Stop (weekend) |
| 27:25 | 41.3 | 0.03 | Restart |
| 28:25 | 41.3 | 0.03 | 10 |
| 30:15 | 41.3 | 0.17 | 10 |
| 30:25 | 41.3 | 0.19 | 10 |
| 30:40 | 41.3 | 0.15 | 10 |
| 31:40 | 41.3 | 0.11 | 10 |
| 32:25 | 41.3 | 0.18 | 10 |
| 33:25 | 41.3 | 0.04 | 10 |
| 34:55 | 41.3 | 0.02 | 10 |
| 50:55 | 41.3 | 0.04 | 10 |
| 53:15 | 41.3 | 0.02 | 10 |
| 55:45 | 41.3 | 0.02 | 10 |
| 57:20 | 41.3 | 0.02 | 10 |
| 59:25 | 41.3 | 0.02 | 10 |
| 74:40 | 41.3 | 0.01 | 10 |
| 76:15 | 41.3 | 0.11 | 5 |
| 77:10 | 41.3 | 0.10 | 5 |
| 78:10 | 41.3 | 0.78 | 5 |
| 80:10 | 41.3 | 0.09 | 5 |
| 80:55 | 41.3 | 0.12 | 5 |
| 82:55 | 41.3 | 0.10 | 5 |
| 83:25 | 41.3 | 0.11 | 5 |
| 99:25 | 41.3 | 0.40 | 5 |
| 99:55 | 41.3 | 0.32 | 5 |
| 100:25 | 41.3 | 0.33 | 5 |
| 101:25 | 41.3 | 0.28 | 5 |
| 102:25 | 41.3 | 0.30 | 5 |
| 103:55 | 41.3 | 0.27 | 5 |
| 104:55 | 41.3 | 0.33 | 5 |
| 105:55 | 41.3 | 0.30 | 5 |
| 106:55 | 41.3 | 0.29 | 5 |
| 107:25 | 41.3 | 0.28 | Stop (weekend) |
| 196:55 | 41.3 | 0.28 | Restart |
| 199:55 | 41.3 | 0.45 | 5 |
| 202:55 | 41.3 | 0.53 | 5 |
| 202:55 | 41.3 | 0.54 | 10 |
| 203:40 | 41.3 | 0.04 | 10 |

Thus, even after a long-time run no decrease of catalytic activity was observed. The mechanical structure of the catalyst remained unchanged and no catalyst particles were observed in the outlet.

## Claims

1. A process for catalytic decomposition of hydrogen peroxide in an aqueous solution, wherein the process comprises contacting the aqueous solution with an iron oxide.

2. Process according to claim 1, wherein the specific surface area of the iron oxide is higher than 100 m²/g.

3. Process according to claim 1 or 2, wherein the particle size of the iron oxide is between 0.05 mm and 5.0 mm.

4. Process according to any of claims 1 to 3, wherein the iron oxide is granulated ferric hydroxide.

5. Process according to any of claims 1 to 4, wherein the iron oxide is granulated ferric hydroxide having
a specific surface area of not less than 250 m²/g;
iron content of between 51 wt.-% to 71 wt.-% based on the dry weight of the iron oxide;
average particle size between 0.1 mm and 2.0 mm.

6. Process according to claims 1 or 5, wherein the content of hydrogen peroxide in the aqueous solution is between 1 g/l and 100 g/l.

7. Process according to any of claims 1 to 6, wherein the aqueous solution has a pH value above 3.0.

8. Process according to any of claim 1 to 7, wherein the aqueous solution has a pH value above 5.0.

9. Process according to any of claims 1 to 8, wherein the process is carried out on a column.

10. Process according to any of claims 1 to 9, wherein the aqueous solution is in contact with the iron oxide for more than 5 minutes.

11. A process for removal of hydrogen peroxide from an aqueous solution, wherein the process comprises the following steps:
a) adjusting the pH value of the aqueous solution;
b) optionally, removing insoluble materials from the aqueous solution obtained in step a); and
c) catalytically decomposing the hydrogen peroxide from the aqueous solution obtained in steps a) or b) according to the process of any of claims 1-10.

12. Process according to claim 11, wherein the aqueous solution obtained in step c) is subsequently subjected to biological treatment.

13. Process according to claim 11 or 12, wherein the aqueous solution is industrial waste-water.
